# EUROPEAN PATENT SPECIFICATION

(11) **EP 2 348 810 B1**
(45) Date of publication and mention of the grant of the patent: **21.11.2012**
(21) Application number: 09760344.3
(22) Date of filing: 08.10.2009
(51) Int. Cl.: A01F 15/07

(54) **DEVICE AND METHOD FOR COMPACTION AND PACKING OF ROUND BALES**
VORRICHTUNG UND VERFAHREN ZUM PRESSEN UND VERPACKEN VON RUNDBALLEN
DISPOSITIF ET PROCÉDÉ POUR PRESSER ET CONDITIONNER DES BALLES RONDES

(30) Priority: 08.10.2008 NO 20084213
(43) Date of publication of application: 03.08.2011
(73) Proprietor: CNH Polska Sp.z o.o., 09-407 Plock (PL)
(72) Inventor: BACHMANN, Walter, CH-8332 Russikon (CH)
(74) Representative: Bergheim, Olav
(86) International application number: PCT/NO2009/000349
(87) International publication number: WO 2010/041956

(56) References cited:
- EP-A- 1 813 145
- WO-A-00/64237
- DE-C1- 4 012 739
- US-A- 4 697 402
- US-A- 5 729 953

## Description

The present application relates to compaction and wrapping of different materials, as agricultural or industrial products, in a round bale press. More specifically the invention relates to a device and a method as stated in the introducing part of claim 1 and 10, respectively. Such a device is disclosed in US-A-5729953.

Traditionally round bales of different materials are formed in above-mentioned machine by first leading a web around a round bale simultaneously with, or immediately after this has been compressed and formed into a round bale, in order to keep the round bale compressed during the subsequent wrapping in plastic film in the same machine. The only task of the web is thus to keep the round bale compressed until the plastic film, which advantageously is made of polyethylene, has been wrapped around the round bale, and where the function of the web thus typically is limited to about half a minute, after which the round bale is kept compressed and sealed by means of the plastic film in which it is wrapped.

It is thus apparent that it would be desirable to omit use of the web, as the web involves an additional and cost increasing step in the wrapping process.

According to the invention it is thus provided a device and a method as stated in the characterizing clause of claim 1 and 10, respectively.

Advantageous embodiments of the invention appear from the dependent claims.

The invention will in the following be described in more details by means of a not-limiting exemplifying embodiment, in which
Figure 1 is a principle sketch shown in perspective of the device according to the invention, and
Figure 2 is a further principle sketch of the invention, shown from the side.

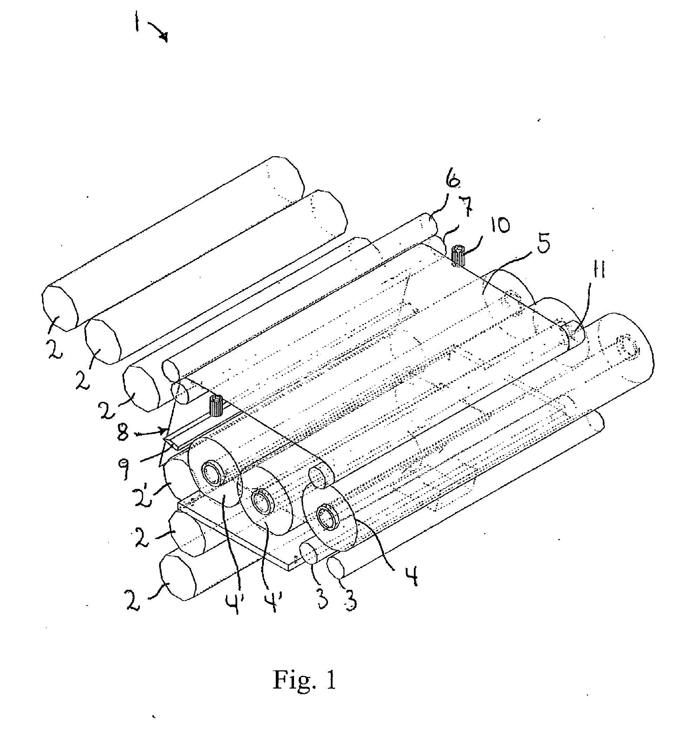

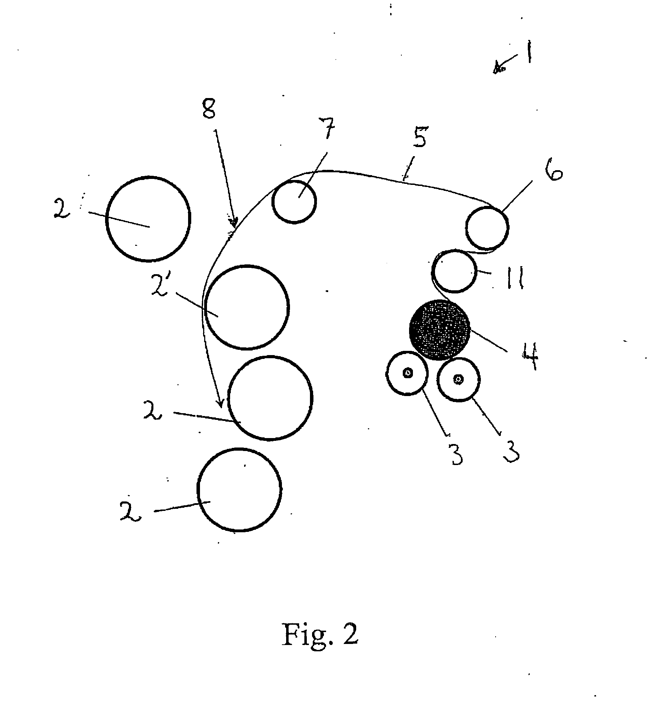

In figure 1 and 2 it is in principle shown a device 1 for wrapping of a not shown round bale. The device 1 comprises a number of press rollers 2 for pressing of the round bale, of which press rollers 2 only some are shown in the figures. Figure 1 is a further simplified principle sketch as compared with figure 2, and with a somewhat simplified configuration of amongst other the course or progress of a plastic film through the device. Identical or similar components are thus thoroughly denoted by the same referral numerals in the drawings.

With particular reference to figure 1 the device 1 further comprises two support rollers 3 for free support of a plastic film roll 4, a first drive roller 11 for stretching and pulling-off of plastic film 5 from the roll 4, a second drive roller 6 for pulling-off plastic film and altering the guiding direction of the plastic film 5, and a third drive roller 7 for pulling-off and direction altering the plastic film. The plastic film contacts, as shown, advantageously about 180° of the circumference of the first and the second drive roller 11, 6, which gives a good stretching due to a large contact area and a correspondingly large friction between the rollers 11, 6 and the plastic film 5.

All of the press rollers are advantageously drive rollers for pressing and rotating a round bale into its final form, as material is fed into that press chamber which circumferentially is fully or partly limited by the press rollers 2.

All of the press rollers rotate with substantially the same speed, which speed typically is determined by the relevant motor rotation speed of a not shown tractor connected to the device 1. Between the press rollers 2 and the drive roller 7 it is additionally provided a not shown means for controlling the relative rotation speed between the press rollers 2 and the drive roller 7, advantageously by means of a belt variator transmission known *per se.* By means of said means the rotation speed of the drive roller 7 is advantageously adjusted to be 10 - 40 % lower than the rotation speed of the press rollers 2, such that it between the one of the press rollers 2' which first contacts the plastic film 5 after the drive roller 7 thus is created a stretching zone 8 for the plastic film 5. The stretching zone 8 results in that the plastic film 5 exits the press roller 2' with what is herein denoted as a positive velocity difference or a pretension, and the plastic film 5 is thus "shot" into the press chamber which is fully or partly limited by the press rollers 2, 2'. The plastic film 5 will thus easily follow the surface of the rotating round bale and be applied around this. Advantageously the film can be stretched by 50 % in its longitudinal direction in the stretching zone 8, and with a force of about 2000 N.

With particular reference to figure 2, in the stretching zone 8 it is provided a cutting means 9, advantageously as a knife arranged transversally of the plastic film 5, for cutting of the plastic film 5 when a suitable length of this is wrapped around the round bale. Further, on each side of the plastic film 5 it is advantageously provided two free rotating rollers known *per se,* arranged on respectively, not shown hydraulically controlled scissor arms, for controlling the plastic film in width direction such that there by movement of the rollers 10 against each other is formed a string of the plastic film 5 for easier application of this, also along the substantially flat sides of the round bale in those cases in which a plastic film 5 is used having a width which is adapted for covering the sides of the round bale, too.

As shown in figure 2, it is advantageously provided room for storage of a maximum of two plastic film rolls 4'.

A not shown control system is advantageously provided for the device 1, comprising a number of sensors for measuring of film length for the round bale, for detection of the position of the cutting means 9, for adjustment of the relative speed between the press rollers 2, 2' and the drive roller 7, etc.

Even if the description of the exemplifying embodiment above and in the claims is referred to press rollers 2, 2', this term should, within the scope of the invention, be understood to also comprise similar types of pressing means, for example pressing means in which press belts is used. Likewise it will, in elucidation of the description, be evident for the person skilled in the art that instead of using the belt variator transmission as described herein for controlling the relative rotation speed between the press rollers 2, 2' and the drive roller 7 any kind of means for reduction of the ratio is feasible, for example a conventional gear according to the automobile or bicycle principle, but where the belt variator transmission at present stands out as the preferred solution because of its infinitely variable adjustment ratio.

## Claims

1. Device (1) for compaction and wrapping of round bales, preferably in a round bale press, comprising or adapted for a roll (4) of plastic film (5), and further comprising a number of drive rollers (11, 6, 7) for pulling-off and guiding the plastic film (5) to a press chamber which circumferentially of the round bale is fully or partly limited by a number of press rollers (2) for pressing and rotating the round bale, and in which press chamber the plastic film (5) is applied around the round bale, **characterized in that** means control the relative rotation speed between the last drive roller (7) in a guidance direction of the plastic film (5) and a first (2') of the press rollers (2), such that the plastic film (5), after a
stretching zone (8) between the last drive roller (7) and the first press roller (2'), exits the press roller (2') with a positive speed difference or a pretension which eases application of plastic film (5) around the rotating round bale in the press chamber.

2. Device according to claim 1, **characterized in that** a difference in rotation speed between the press roller (2') and the drive roller (7) is provided by a belt variator transmission.

3. Device according to claim 1 or 2, **characterized in that** the drive roller (7) has an adjustable rotation speed which is from 10 - 40 % lower than the rotation speed of the press roller (2').

4. Device according to any of the preceding claims, **characterized in that** the plastic film (5), which preferably is made of polyethylene, is stretched by about 50 % in its longitudinal direction in the stretching zone (8), and with a force of about 2000 N.

5. Device according to any of the preceding claims, **characterized in that** in the stretching zone (8) it is provided a cutting means (9) for cutting the plastic film (5) when a suitable length of this is wrapped around the round bale.

6. Device according to any of the preceding claims, **characterized in that** on each side of the width direction of the plastic film (5), in an area of the course or guidance direction of the plastic film before the drive roller (7), it is provided a free rotating roller (10) for guidance of the plastic film (5) in width direction, said rollers (10) are moveable against each other to the centre of the plastic film (5) to form the plastic film (5) into a string.

7. Device according to claim 6, **characterized in that** the rollers (10) are moved by means of hydraulically controlled scissor arms.

8. Device according to any of the preceding claims, **characterized by** a plastic film (5) having a width adapted for covering the whole round bale.

9. Device according to any of the preceding claims, **characterized by** a sensor based, automated control system.

10. Method of compaction and wrapping of round bales in a device as stated in any of claims 1 - 9, comprising the steps of rotating a round bale in the press chamber, feeding plastic film (5) into the press chamber, and applying the plastic film (5) around the round bale under rotation of the round bale, **characterized by** the additional step of feeding the plastic film (5) into the press chamber with a positive speed difference or a pretension.

## Patentansprüche

1. Vorrichtung (1) zum Pressen und Umwickeln von Rundballen, vorzugsweise in einer Rundballenpresse, die eine Rolle (4) aus Kunststofffolie (5) umfasst oder für diese ausgebildet ist, und die weiterhin eine Anzahl von Antriebsrollen (11, 6, 7) zum Abziehen und Führen der Kunststofffolie (5) zu einer Presskammer umfasst, die in Umfangsrichtung des Rundballens vollständig oder teilweise durch eine Anzahl von Presswalzen (2) zum Pressen und Drehen des Rundballens begrenzt ist, und wobei in dieser Presskammer die Kunststofffolie (5) um den Rundballen herum aufgebracht wird, **dadurch gekennzeichnet, dass** Einrichtungen die relative Drehgeschwindigkeit zwischen der letzten Antriebswalze (7) in einer Führungsrichtung der Kunststofffolie (5) und einer ersten (2') der Presswalzen (2) derart steuern, dass die Kunststofffolie (5) nach einer Streckzone (8) zwischen der letzten Antriebswalze (7) der ersten Presswalze (2') die Presswalze (2') mit einer positiven Geschwindigkeitsdifferenz oder einer Vorspannung verlässt, die das Aufbringen der Kunststofffolie (5) um den rotierenden Rundballen in der Presskammer erleichtert.

2. Vorrichtung nach Anspruch 1, **dadurch gekennzeichnet, dass** eine Differenz der Drehgeschwindigkeit zwischen der Presswalze (2') und der Antriebswalze (7) durch ein Riemen-Variator-Getriebe geschaffen wird.

3. Vorrichtung nach Anspruch 1 oder 2, **dadurch gekennzeichnet, dass** die Antriebswalze (7) eine einstellbare Drehgeschwindigkeit aufweist, die von 10 - 40% niedriger als die Drehgeschwindigkeit der Presswalze (2') ist.

4. Vorrichtung nach einem der vorhergehenden Ansprüche, **dadurch gekennzeichnet, dass** die Kunststofffolie (5), die vorzugsweise aus Polyethylen hergestellt ist, um ungefähr 50% in ihrer Längsrichtung in der Streckzone (8) und mit einer Kraft von ungefähr 2000 N gestreckt wird.

5. Vorrichtung nach einem der vorhergehenden Ansprüche, **dadurch gekennzeichnet, dass** die Streckzone (8) mit einer Schneideinrichtung (9) zum Schneiden der Kunststofffolie (5) versehen ist, nachdem eine geeignete Länge der Kunststofffolie um den Rundballen herum gewickelt wurde.

6. Vorrichtung nach einem der vorhergehenden Ansprüche, **dadurch gekennzeichnet, dass** auf jeder Seite der Breitenrichtung der Kunststofffolie (5) in einem Bereich der Bahn oder der Führungsrichtung der Kunststofffolie vor der Antriebswalze (7) eine frei drehbare Walze (10) zum Führen der Kunststofffolie (5) in Breitenrichtung vorgesehen ist, und dass die Walzen (10) in Richtung aufeinander zum Mittelpunkt der Kunststofffolie (5) bewegbar sind, um die Kunststofffolie (5) in einem Strang zu formen.

7. Vorrichtung nach Anspruch 6, **dadurch gekennzeichnet, dass** die Rollen (10) mit Hilfe von hydraulisch gesteuerten Scherenarmen bewegt werden.

8. Vorrichtung nach einem der vorhergehenden Ansprüche, **gekennzeichnet durch** eine Kunststofffolie (5), die eine Breite aufweist, die zur Abdeckung des gesamten Rundballens ausgebildet ist.

9. Vorrichtung nach einem der vorhergehenden Ansprüche, **gekennzeichnet durch** ein Sensor-basiertes automatisches Steuersystem.

10. Verfahren zum Pressen und Umwickeln von Rundballen in einer Vorrichtung nach einem der Ansprüche 1 bis 9, mit den Schritten des Drehens eines Rundballens in einer Presskammer, der Zuführung einer Kunststofffolie (5) in die Presskammer, und des Aufbringens der Kunststofffolie (5) um den Rundballen herum während der Drehung des Rundballens, **gekennzeichnet durch** den zusätzlichen Schritt der Zuführung der Kunststofffolie (5) in die Presskammer mit einer positiven Geschwindigkeitsdifferenz oder einer Vorspannung.

## Revendications

1. Dispositif (1) pour compacter et enrubanner des balles rondes, de préférence dans une presse à balles rondes, comprenant ou approprié pour un rouleau (4) de film plastique (5) et comprenant en plus plusieurs rouleaux d'entraînement (11, 6, 7) destinés à tirer et guider le film plastique (5) vers une chambre de pressage qui, autour de la circonférence de la balle ronde, est entièrement ou partiellement limitée par plusieurs rouleaux presseurs (2) destinés à presser et à faire tourner la balle ronde, et dans laquelle le film plastique (5) est appliqué autour de la balle ronde, **caractérisé en ce qu'**un organe commande la vitesse de rotation relative entre le dernier rouleau d'entraînement (7) dans le sens de guidage du film plastique (5) et un premier (2') des rouleaux presseurs (2), de telle sorte que le film plastique (5), après une zone d'étirage (8) entre le dernier rouleau d'entraînement (7) et le premier rouleau presseur (2'), sort du rouleau presseur (2') avec une différence de vitesse positive ou une pré-tension qui facilite l'application du film plastique (5) autour de la balle ronde en rotation dans la chambre de pressage.

2. Dispositif selon la revendication 1, **caractérisé en ce qu'**une différence dans la vitesse de rotation entre le rouleau presseur (2') et le rouleau d'entraînement (7) est fournie par une transmission à variateur à courroie.

3. Dispositif selon la revendication 1 ou 2, **caractérisé en ce que** le rouleau d'entraînement (7) a une vitesse de rotation réglable qui est inférieure à la vitesse de rotation du rouleau presseur (2') de 10 à 40 %.

4. Dispositif selon l'une quelconque des revendications précédentes, **caractérisé en ce que** le film plastique (5), qui est constitué de préférence de polyéthylène, est allongé d'environ 50 % dans le sens longitudinal dans la zone d'étirage (8) et avec une force d'environ 2000 N.

5. Dispositif selon l'une quelconque des revendications précédentes, **caractérisé en ce que**, dans la zone d'étirage, il est prévu un moyen de coupe (9) destiné à couper le film plastique (5) lorsqu'une longueur appropriée de celui-ci est enrubannée autour de la balle ronde.

6. Dispositif selon l'une quelconque des revendications précédentes, **caractérisé en ce que**, sur chaque côté dans le sens de la largeur du film plastique (5), dans une zone de la trajectoire ou dans le sens de guidage du film plastique avant le rouleau d'entraînement (7), il est prévu un rouleau en rotation libre (10) destiné à guider le film plastique (5) dans le sens de la largeur, lesdits rouleaux (10) pouvant être déplacés l'un par rapport à l'autre vers le centre du film plastique (5) pour façonner le film plastique (5) afin de former une corde fine.

7. Dispositif selon la revendication 6, **caractérisé en ce que** les rouleaux (10) sont déplacés au moyen de bras de ciseaux commandés hydrauliquement.

8. Dispositif selon l'une quelconque des revendications précédentes, **caractérisé en ce que** le film plastique (5) a une largeur adaptée pour recouvrir la balle ronde entière.

9. Dispositif selon l'une quelconque des revendications précédentes, **caractérisé par** un système de commande automatisé basé sur un détecteur.

10. Procédé de compactage et d'enrubannage de balles rondes dans un dispositif revendiqué selon l'une quelconque des revendications 1 à 9, comprenant les étapes consistant à faire tourner une balle ronde dans la chambre de pressage, alimenter le film plastique (5) dans la chambre de pressage, et appliquer le film plastique (5) autour de la balle ronde lorsqu'elle est en rotation, **caractérisé en ce qu'**il comprend l'étape additionnelle consistant à alimenter le film plastique (5) dans la chambre de pressage avec une différence de vitesse positive ou une pré-tension.
